# EUROPEAN PATENT SPECIFICATION

(11) **EP 3 370 005 B1**
(45) Date of publication and mention of the grant of the patent: **09.09.2020**
(21) Application number: 15907196.8
(22) Date of filing: 26.10.2015
(51) Int. Cl.: F24F 3/00, F24F 3/06, F24F 12/00, F24F 11/64, F24F 11/65, F24F 11/46, F24F 11/86, F25B 13/00, F25B 49/02, F24F 140/50

(54) **AIR-CONDITIONING SYSTEM**
KLIMATISIERUNGSSYSTEM
SYSTÈME DE CLIMATISATION

(43) Date of publication of application: 05.09.2018
(73) Proprietor: Mitsubishi Electric Corporation, Chiyoda-ku Tokyo 100-8310 (JP)
(72) Inventor: HATA, Masahiro, Tokyo 100-8310 (JP); MATSUZAWA, Koji, Tokyo 100-8310 (JP); HATTORI, Taro, Tokyo 100-8310 (JP)
(74) Representative: Pfenning, Meinig & Partner mbB
(86) International application number: PCT/JP2015/080112
(87) International publication number: WO 2017/072832

(56) References cited:
- EP-A1- 2 525 160
- EP-A2- 2 431 677
- WO-A1-2014/184883
- JP-A- S61 165 532
- JP-A- 2000 193 288
- JP-A- 2001 263 755
- JP-A- 2005 134 062
- JP-A- 2012 117 699
- KR-B1- 100 820 821
- KR-B1- 101 029 988

## Description

### Technical Field

The present invention relates to an air-conditioning system, and particularly to an air-conditioning system including an air handling unit and having a plurality of outdoor units as heat sources of heat pump apparatuses, with the air handling unit conditioning air supplied into a building.

### Background Art

In general, an air handling unit (hereinafter referred to as the AHU) is a ventilation apparatus or a ventilation and air-conditioning apparatus configured to have one or a plurality of heat exchange coils integrally installed in a body casing. The AHU may also be equipped with a device called a heat recovery device, for example. The heat recovery device reuses the heat of air exhausted from the inside of a building to the outside of the building to condition outside air flowing into the building from the outside of the building. Herein, even when the AHU is a simple ventilation apparatus, for example, directly supplying the outside air into the building may cause discomfort. Consequently, the AHU normally includes devices such as the heat recovery device and the heat exchange coil.

The AHU of this type uses hot water heated by a boiler, cold water cooled by a chiller, or high-temperature or low-temperature refrigerant circulating through a heat pump apparatus as a heat source for exchanging heat with air in the heat change coil, and allows the hot water, the cold water, or the high-temperature or low-temperature refrigerant to flow through the heat exchange coil to heat or cool the air. To heat the interior of the building, for example, the AHU allows hot water or condensed refrigerant to pass through a pipe of heat exchange coil, and allows outside air or outside air having passed through the heat recovery device to pass through the heat exchange coil to heat the outside air and supply the heated outside air. The air to be supplied is sent to each room in the building from a duct by an air-sending device.

Herein, when the AHU uses a heat pump apparatus including a compressor as the heat source, the following issue commonly arises. For example, the capacity required of the heat pump apparatus to enable the AHU to respond to a heat source load (hereinafter referred to as the required capacity) may fall below the capacity obtained when the operating frequency of the compressor in the heat pump apparatus is at a minimum level (hereinafter referred to as the minimum capacity). To enable the heat pump apparatus to respond to the required capacity lower than the minimum capacity, an on-off cycle operation is unavoidable, in which the driving of the compressor is repeatedly started and stopped.

When such an on-off cycle operation is often performed, the start and stop of the driving of the compressor is frequently repeated, thus shortening the life of the heat pump apparatus. Consequently, there is a concern that discomfort may be caused by factors such as decreased reliability and fluctuations in blowoff temperature.

In the air-conditioning system including the AHU, in particular, the heat source load in an operation such as ventilation during an intermediate season such as spring and fall is lower than that in normal air-conditioning. Consequently, the on-off cycle operation is often performed in the heat pump apparatus, making the above-described issue more noticeable.

Herein, there is provided a heat source system formed of a plurality of heat pump units and covering a range from a low required capacity to a high required capacity (see Patent Literatures 1 and 2, for example).

For example, Patent Literature 1 describes a hot water supply system that includes a plurality of heat pump apparatuses and changes the number of heat pump apparatuses to be operated to average the heat source load, such as the number of starts and stops of the compressor of each of the heat pump apparatuses and the operating time of the compressor. Further, Patent Literature 2 describes a feedwater heating system that includes a plurality of heat pump apparatuses and sequentially starts the heat pump apparatuses corresponding to the hot water use load. Further, Patent Literature 3 describes an air conditioner according to the preamble of claim 1.

### Citation List

### Patent Literature

Patent Literature 1: Japanese Unexamined Patent Application Publication No. 2005-134062
Patent Literature 2: Japanese Unexamined Patent Application Publication No. 2014-194315
Patent Literature 3: European Patent Application EP-2431677-A

### Summary of Invention

### Technical Problem

The techniques described in these literatures, however, are for a hot water supply system, not for an air-conditioning system including an AHU. Further, the techniques are not about connecting outdoor units having different operation capacities nor determining the number of outdoor units to be operated on the basis of the capacities of the outdoor units. Consequently, the techniques are not capable of responding to a request for improved reliability by reducing the number of turn-ons and turn-offs of the compressor in response to changes in the required capacity, for example.

The present invention has been made in view of the above-described issues, and aims to provide a reliable air-conditioning system including an AHU using a plurality of heat pump apparatuses as heat sources.

### Solution to Problem

An air-conditioning system according to an embodiment of the present invention includes an air handling unit including an air exhaust fan configured to form a flow of air from an inside of a building toward an outside of the building, an air supply fan configured to form a flow of air from the outside of the building toward the inside of the building, and at least one heat exchange coil configured to exchange heat between air flowing from the outside of the building to the inside of the building and refrigerant, a plurality of outdoor units each including a compressor, a pressure reducing device, and an outdoor heat exchanger, and each connected to the at least one heat exchange coil with a refrigerant pipe to each form an independent heat pump apparatus, and a unit number control unit configured to perform unit number control of selecting at least one of the plurality of outdoor units to be operated and determining an operating frequency of the compressor included in the at least one of the plurality of outdoor units to be operated to meet a total required capacity required of the air handling unit corresponding to a heat source load. The plurality of outdoor units include outdoor units different in basic capacity. The unit number control unit identifies at least one of the plurality of outdoor units lowest in the basic capacity, and selects the at least one of the plurality of outdoor units from the at least one of the plurality of outdoor units that is identified.

### Advantageous Effects of Invention

According to an embodiment of the present invention, in the air-conditioning system that includes the air handling unit including the at least one heat exchange coil and the plurality of outdoor units connected to the at least one heat exchange coil with the refrigerant pipe to each form the independent heat pump apparatus and including the outdoor units different in basic capacity, the unit number control unit preferentially identifies and selects the at least one of the plurality of outdoor units lowest in the basic capacity. Consequently, changes of the plurality of outdoor units are reduced, thereby reducing the number of turn-ons and turn-offs of the compressors included in the plurality of outdoor units, and extending the life of the compressors and the life of the plurality of outdoor units. Consequently, a reliable air-conditioning system is obtainable.

### Brief Description of Drawings

[Fig. 1] Fig. 1 is a diagram illustrating a system configuration of a control system of an air-conditioning system in Embodiment 1 of the present invention.
[Fig. 2] Fig. 2 is a diagram illustrating a schematic diagram of the air-conditioning system in Embodiment 1 of the present invention, focusing on a configuration of devices of an AHU 2.
[Fig. 3] Fig. 3 is a diagram illustrating a configuration of devices of an outdoor unit 4 in Embodiment 1 of the present invention.
[Fig. 4] Fig. 4 is a drawing illustrating a flowchart of a procedure of a process related to unit number control in the air-conditioning system in Embodiment 1 of the present invention.
[Fig. 5] Fig. 5 is a diagram illustrating a system configuration of a control system of an air-conditioning system in Embodiment 2 of the present invention.
[Fig. 6] Fig. 6 is a diagram illustrating a system configuration of a control system of an air-conditioning system in Embodiment 3 of the present invention.
[Fig. 7] Fig. 7 is a diagram illustrating a system configuration of a control system of an air-conditioning system in Embodiment 4 of the present invention.
[Fig. 8] Fig. 8 is a diagram illustrating a system configuration of a control system of an air-conditioning system in Embodiment 5 of the present invention. Description of Embodiments

Embodiments 1 to 5 of the present invention will be described below. Embodiments 1 to 5 described below do not limit the present invention. Further, in the drawings, parts assigned with the same reference signs are the same or correspond to each other. The reference signs apply to the entire text of the specification. Further, the forms of component elements described in the entire text of the specification are basically illustrative, and the forms of component elements are not limited to these described ones.

### Embodiment 1

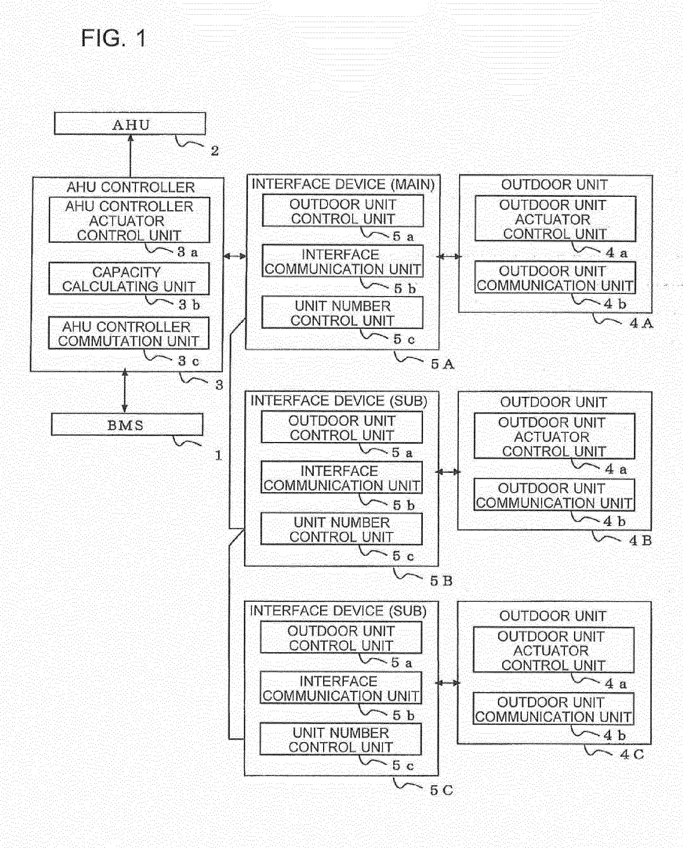

Fig. 1 is a diagram illustrating a system configuration of a control system of an air-conditioning system in Embodiment 1 of the present invention. The air-conditioning system of Embodiment 1 includes a building management system (hereinafter referred to as the BMS) 1, an AHU 2, an AHU controller 3, a plurality of outdoor units 4, and a plurality of interface devices 5. The BMS 1 manages and controls operations such as ventilation and air-conditioning of building facilities, for example. In Embodiment 1, the system configuration includes the BMS 1, but may not include the BMS 1.

A case is assumed where, in the air-conditioning system illustrated in Fig. 1, at least, the AHU controller 3 and the outdoor units 4 are products of different manufacturers. When the AHU controller 3 and the outdoor units 4 are products of different manufacturers, the AHU controller 3 and the outdoor units 4 are often unable to directly exchange signals between the AHU controller 3 and the outdoor units 4. The air-conditioning system of Embodiment 1 is thus configured such that the same number of interface devices 5 as that of the outdoor units 4 are installed between the AHU controller 3 and the outdoor units 4 to relay the signals via the interface devices 5 to perform communication.

The air-conditioning system illustrated in Fig. 1 is configured to have three outdoor units 4 and three interface devices 5. The outdoor units 4 will be referred to as the outdoor units 4A to 4C. Further, the interface devices 5 will be referred to as the interface devices 5A to 5C. The outdoor units 4A to 4C and the interface devices 5A to 5C will be collectively referred to and described as the outdoor units 4 and the interface devices 5, respectively, when their differentiation is not particularly necessary. Herein, the air-conditioning system includes three outdoor units 4 and three interface devices 5. The number of outdoor units 4 and the number of interface devices 5 in the configuration, however, may be determined as desired. For example, the air-conditioning system may be configured to include less than three outdoor units 4 and less than three interface devices 5, or may be configured to include four or more outdoor units 4 and four or more interface devices 5. Further, the air-conditioning system of Embodiment 1 is assumed to be configured such that the plurality of outdoor units 4 include outdoor units 4 different in basic capacity. Herein, the basic capacity refers to the capacity obtained when a compressor 41 included in an outdoor unit 4 is driven at the maximum operating frequency, and corresponds to the maximum capacity of the outdoor unit 4. In Embodiment 1, a case is assumed where the air-conditioning system is configured to include two outdoor units 4 each having a basic capacity of 5 kW and one outdoor unit 4 having a basic capacity of 10 kW, for example.

The AHU controller 3 is a device that controls the AHU 2. As illustrated in Fig. 1, the AHU controller 3 of Embodiment 1 includes, as a configuration of a control system of the AHU controller 3, an AHU controller actuator control unit 3a, a capacity calculating unit 3b, and an AHU controller communication unit 3c. The AHU controller actuator control unit 3a controls a driving operation of a driving device that serves as an actuator such as an air supply fan 26, an air exhaust fan 30, a louver 23, and a louver 28 included in the AHU 2.

The capacity calculating unit 3b calculates a required capacity of the AHU 2 corresponding to the load. The required capacity of the AHU 2 corresponds to a total required capacity that is the sum of the required capacities of all outdoor units 4. The capacity calculating unit 3b calculates the total required capacity of all outdoor units 4, not the required capacity of each of the outdoor units 4. Specifically, on the basis of a temperature difference ΔT between a blowoff air temperature measured by a blowoff air temperature sensor 11 and a set temperature, which is previously set, the capacity calculating unit 3b calculates the total required capacity [kW] required to adjust the blowoff air temperature to the set temperature. The capacity calculating unit 3b calculates the ratio (0 to 100%) of the total required capacity to a total sum capacity [kW], which is the sum of the basic capacities of all outdoor units 4. A case is assumed where the value of the calculated ratio represents the total required capacity. Herein, the temperature difference ΔT may be the temperature difference between the set temperature and the temperature measured by a building interior temperature sensor 13, which corresponds to the temperature of return air from the inside of the building.

The AHU controller communication unit 3c performs a process related to communication between the AHU controller 3 and the interface devices 5 and the BMS 1. For example, the AHU controller communication unit 3c receives from the BMS 1 a signal including data of the ventilation amount and the set temperature. In Embodiment 1, the AHU controller communication unit 3c transmits to the interface devices 5 a signal including the total required capacity calculated by the capacity calculating unit 3b.

Each of the outdoor units 4 includes, as a configuration of a control system of each of the outdoor units 4, an outdoor unit actuator control unit 4a and an outdoor unit communication unit 4b. The outdoor unit actuator control unit 4a controls a driving operation of an actuator such as the compressor 41, a four-way valve 42, and an expansion valve 44 included in the outdoor unit 4, as described later. The outdoor unit communication unit 4b transmits a process signal of communicating with the AHU controller 3 via the corresponding interface device 5, for example. Further, in Embodiment 1, the outdoor unit communication unit 4b transmits to the interface device 5 a signal including data related to the capacity of the outdoor unit 4.

Further, each of the interface devices 5 of Embodiment 1 includes, as a configuration of a control system of each of the interface devices 5, an outdoor unit control unit 5a, an interface communication unit 5b, and a unit number control unit 5c. The outdoor unit control unit 5a performs processes such as operating and stopping the corresponding outdoor unit 4 and responding to anomalies of the outdoor unit 4. The interface communication unit 5b performs processes such as conversion of signals to enable communication between products of different manufacturers, for example.

Herein, it is an object of the present invention to reduce the frequency of the on-off cycle operation, which is repeatedly turning on and off the compressor 41, under a low load. To address this issue, the unit number control unit 5c in Embodiment 1 performs unit number control, which is selecting the outdoor unit 4 to be operated and controlling the operating frequency of the compressor 41 included in the selected outdoor unit 4 corresponding to the total required capacity received from the AHU controller 3.

A case is assumed where, in Embodiment 1, each of the interface devices 5 includes the unit number control unit 5c to perform the unit number control. As illustrated in Fig. 1, the air-conditioning system of Embodiment 1 is configured such that each of the outdoor units 4 is connected to the corresponding interface device 5. The air-conditioning system of Embodiment 1 thus includes the plurality of interface devices 5. In this configuration, one of the interface devices 5 serves as a main unit. Further, the unit number control unit 5c included in the interface device 5 serving as the main unit performs processes such as calculation related to the unit number control. For example, each of the interface devices 5 acquires data related to the model of the outdoor unit 4 connected to the interface device 5, such as the data of the basic capacity of the outdoor unit 4 transmitted from the outdoor unit 4. The acquired data is collected in the interface device 5 serving as the main unit. Consequently, the unit number control unit 5c of the interface device 5 serving as the main unit is capable of obtaining, as data, the number of connected outdoor units 4 and a total basic capacity of the outdoor units 4 in the air-conditioning system. On the basis of the obtained data, the unit number control unit 5c of the interface device 5 serving as the main unit performs the unit number control process of determining to operate or stop each of the outdoor units 4 and determining the operating frequency of the compressor 41 of the outdoor unit 4 to be operated.

Further, the unit number control unit 5c of each of the interface devices 5 serving as a sub-unit receives a signal of a unit number control command transmitted from the interface device 5 serving as the main unit. Then, when it is necessary to operate the outdoor unit 4 connected to the unit number control unit 5c, the unit number control unit 5c transmits to the outdoor unit 4 a signal of an operation command including an operation start and the operating frequency of the compressor 41, which will be described later. Herein, the differentiation between the interface device 5 serving as the main unit and the other interface devices 5 each serving as the sub-unit may be made by configuring the interface devices 5 per se as different devices or by using a device such as a switch.

In Embodiment 1, the units forming the control system of the AHU controller 3, the outdoor units 4, or the interface devices 5 may be configured with hardware such as a circuit device. Alternatively, the units may be configured with an arithmetic and control unit (computer) such as a central processing unit (CPU), for example, and processing procedures of the units may be preprogrammed and configured with software or firmware. The arithmetic and control unit executes the programs and performs processes on the basis of the programs to implement the processes performed by the units. The data of these programs may be stored in a storage device (not illustrated), for example.

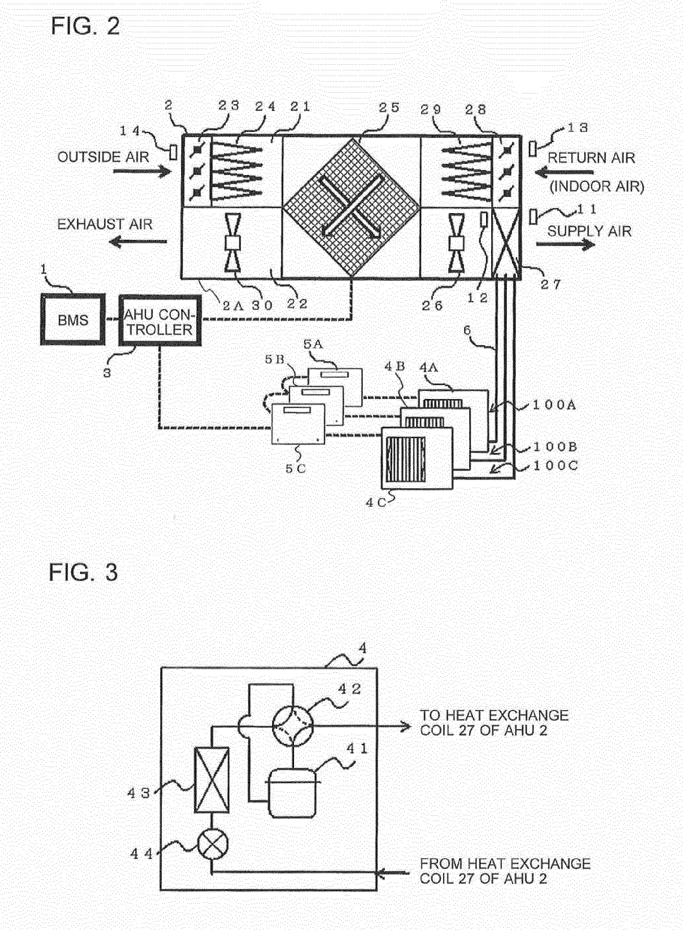

Fig. 2 is a diagram illustrating a schematic diagram of the air-conditioning system in Embodiment 1 of the present invention, focusing on a configuration of devices of the AHU 2. The AHU 2 is a ventilation apparatus that exchanges air in the interior of the building and air in the outside of the building or an air-conditioning apparatus that heats or cools air in the interior of the building while performing ventilation. A description will be given here on the assumption that the AHU 2 acts as an air-conditioning apparatus. The AHU 2 is installed in a structure, such as an office, a building, a commercial facility, and a factory, for example. The AHU 2 includes, in a body casing 2A, a first passage 21 serving as a passage for supplying outside air flowing in from the outside of the building to the inside of the building and a second passage 22 serving as a passage for exhausting the return air flowing in from the inside of the building to the outside of the building. Each of the first passage 21 and the second passage 22 has a wall forming a passage, for example.

The air flowing through the first passage 21 passes through the louver 23, a filter 24, a heat recovery device 25, the air supply fan 26, and a heat exchange coil 27. Further, the air flowing through the second passage 22 passes through the louver 28, a filter 29, the heat recovery device 25, and the air exhaust fan 30. The louver 23 is disposed at an inlet of the outside air to control factors such as the flow rate of air flowing in from the outside of the building. The filter 24 removes substances such as dust contained in the outside air flowing in from the outside of the building. Further, the louver 28 is disposed at an inlet of the return air to control factors such as the flow rate of air flowing in from the inside of the building. The filter 29 removes substances such as dust contained in the return air flowing in from the inside of the building. The heat recovery device 25 allows both the air flowing through the first passage 21 and the air flowing through the second passage 22 to pass through the heat recovery device 25. The heat recovery device 25 further exchanges heat between the air passing through the first passage 21 and the air passing through the second passage 22. Herein, the air passing through the first passage 21 and the air passing through the second passage 22 do not mix with each other. The air supply fan 26 forms a flow of air in the first passage 21 flowing into the building from the outside of the building. Further, the air exhaust fan 30 forms a flow of air in the second passage 22 flowing to the outside of the building from the inside of the building.

The heat exchange coil 27 exchanges heat between refrigerant and the air passing through the first passage 21 and the heat recovery device 25. The heat exchange coil 27 of Embodiment 1 includes a plurality of independent refrigerant passages (not illustrated), for example. Further, the refrigerant passages (not illustrated) and the outdoor units 4 are each connected by a refrigerant pipe 6 to thereby form a plurality of heat pump apparatuses 100 forming a refrigerant circuit. Embodiment 1 has the three outdoor units 4A to 4C and the heat exchange coil 27 connected by pipes, and thus has three independent heat pump apparatuses 100A to 100C (hereinafter referred to as the heat pump apparatuses 100 when collectively referred to). Herein, the heat exchange coil 27 is not limited to the above-described configuration. For example, the AHU 2 may be configured to include the same number of heat exchange coils 27 as that of the outdoor units 4, with the heat exchange coils 27 each connected to the corresponding outdoor unit 4 to form a refrigerant circuit.

The AHU 2 further includes the blowoff air temperature sensor 11, a heat exchange inlet temperature sensor 12, the building interior temperature sensor 13, and an outside air temperature sensor 14. The blowoff air temperature sensor 11 measures the blowoff temperature of the air supplied into the building from the first passage 21. Further, the heat exchange inlet temperature sensor 12 measures the temperature of the air flowing into the heat exchange coil 27. The building interior temperature sensor 13 measures the temperature of the air inside the building. The outside air temperature sensor 14 measures the temperature of the air outside the building. Each of the blowoff air temperature sensor 11, the heat exchange inlet temperature sensor 12, the building interior temperature sensor 13, and the outside air temperature sensor 14 transmits to the AHU controller 3 a signal including the measured temperature as data. Herein, the building interior temperature sensor 13 is only required to be capable of measuring the temperature inside the building. For example, the building interior temperature sensor 13 measures a blowoff air temperature of air supplied from the AHU 2 into the building and a return air temperature of air returning to the AHU 2 from the space inside the building. Further, the temperature sensors may not be installed to the AHU 2, depending on the design.

Herein, the AHU 2 is not limited to the configuration illustrated in Fig. 2. The AHU 2 is only required to be configured to include at least a passage enabling ventilation through replacement of the air inside the building with the air outside of the building and a heat exchange coil that exchanges heat between the refrigerant and the air.

A description will be given below of operations related to processes such as air-conditioning of the AHU 2. When the air supply fan 26 is driven, the outside air flows into the first passage 21 and passes through the louver 23 and the filter 24. The outside air further passes through the heat recovery device 25, exchanges heat with the air passing through the second passage 22, and then flows into the heat exchange coil 27. The air flowing into the heat exchange coil 27 exchanges heat with the refrigerant, and then is supplied into the building via a duct (not illustrated), for example, as supply air.

When the air exhaust fan 30 is driven, on the other hand, the return air flows into the second passage 22 and passes through the louver 28 and the filter 29. The return air further passes through the heat recovery device 25, exchanges heat with the air passing through the first passage 21, and then is exhausted to the outside of the building.

Herein, the flow rate of the refrigerant passing through the heat exchange coil 27 is controlled by the compressor 41 and the expansion valve 44 included in each of the outdoor units 4, as described later, and is adjusted to meet requests from the AHU controller 3 concerning the temperature and capacity, for example.

Fig. 3 is a diagram illustrating a configuration of devices of each of the outdoor units 4 in Embodiment 1 of the present invention. As illustrated in Fig. 3, the outdoor unit 4 includes the compressor 41, the four-way valve 42, an outdoor heat exchanger 43, and the expansion valve 44. The compressor 41 compresses the refrigerant suctioned into the compressor 41, and discharges the compressed refrigerant. Herein, it is possible to change the capacity of the compressor 41 (the amount of refrigerant to be discharged per unit time) by changing the operating frequency of the compressor 41 to a desired value with an inverter circuit, for example. The four-way valve 42 is a valve for switching the flow of the refrigerant between during a cooling operation and during a heating operation, for example. The outdoor heat exchanger 43 in Embodiment 1 exchanges heat between the refrigerant and the air outside the building, for example. During the heating operation of heating the interior of the building, for example, the outdoor heat exchanger 43 acts as an evaporator to evaporate and gasify the refrigerant. Further, during the cooling operation of cooling the interior of the building, the outdoor heat exchanger 43 acts as a condenser or a radiator to cause the refrigerant to reject heat. Further, the expansion valve 44, which serves as a pressure reducing device, reduces the pressure of the refrigerant to expand the refrigerant. Herein, the configuration of the outdoor unit 4 is not limited to the configuration illustrated in Fig. 3. For example, when the outdoor unit 4 performs only one of the cooling and the heating, the outdoor unit 4 may not be installed with the four-way valve 42.

A description will be given below of the unit number control performed by the unit number control unit 5c to reduce the number of turn-ons and turn-offs of the compressor 41 and thereby improve the reliability of the air-conditioning system. Basic concepts of the unit number control are the following three points: (1) the outdoor units 4 are operated from the outdoor unit 4 lowest in the basic capacity, (2) the number of turn-ons and turn-offs of each of the compressors 41 is monitored, and the selection of the outdoor units 4 is performed to equalize the number of turn-ons and turn-offs among the outdoor units 4, and (3) driving the compressor 41 at the maximum operating frequency is avoided as much as possible.

As for (1), with the outdoor units 4 being sequentially operated from the outdoor unit 4 lowest in the basic capacity, changes of the selected outdoor unit 4 in response to changes of the required capacity are reduced. Consequently, as a result, the number of turn-ons and turn-offs of the compressor 41 of the outdoor unit 4 is reduced, thereby extending the life of the compressor 41. Further, as for (2), continuous operation of a particular one of the compressors 41 is avoided, thereby extending the life of the compressors 41 in the system as a whole. Further, as for (3), it is generally known that driving the compressor 41 at the maximum operating frequency does not necessarily provide high performance. The operating frequency of the compressor 41 is thus controlled to be as low as possible, making it possible to avoid a situation in which the load on the compressor 41 is maximized. In Embodiment 1, the unit number control is performed on the basis of the above-described concepts to thereby improve the reliability of the air-conditioning system.

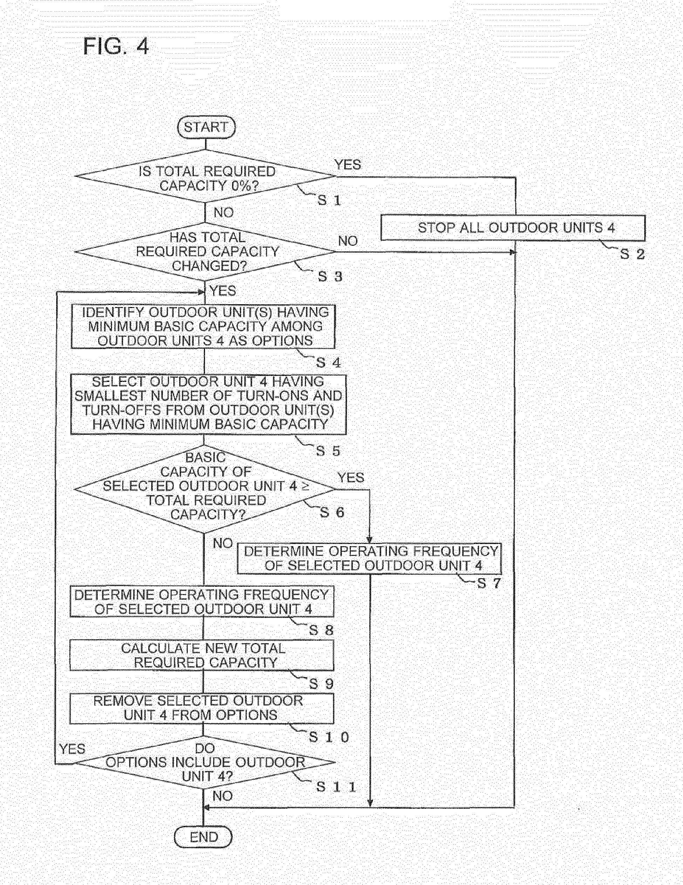

Fig. 4 is a drawing illustrating a flowchart of a procedure of a process related to the unit number control in the air-conditioning system in Embodiment 1 of the present invention. With reference to the flowchart illustrated in Fig. 4, a detailed description will be given below of the unit number control process of determining to operate or stop each of the outdoor units 4 and determining the operating frequency of the compressor 41 of the outdoor unit 4 to be operated. In Embodiment 1, the unit number control unit 5c included in the interface device 5 serving as the main unit performs the unit number control process. In response to data of the total required capacity transmitted from the AHU controller 3, the interface device 5 serving as the main unit performs the unit number control. Further, the unit number control unit 5c is assumed to previously have selectable outdoor units 4 as options.

At step S1, the unit number control unit 5c determines whether or not the total required capacity included in the signal transmitted from the AHU controller 3 is 0%. When having determined that the total required capacity is 0%, the unit number control unit 5c proceeds to step S2 to stop all outdoor units 4 included in the air-conditioning system. When having determined that the total required capacity is not 0%, the unit number control unit 5c proceeds to step S3.

At step S3, the unit number control unit 5c determines whether or not the total required capacity received from the AHU controller 3 has changed from the total required capacity obtained in the last unit number control. When having determined that the total required capacity has not changed, the unit number control unit 5c completes the process. When having determined that the total required capacity has changed, the unit number control unit 5c proceeds to step S4.

At step S4, the unit number control unit 5c identifies the outdoor unit 4 having the minimum basic capacity among the selectable outdoor units 4 in the options. Herein, when the options include a plurality of outdoor units 4 having the minimum basic capacity, the unit number control unit 5c identifies the plurality of outdoor units 4. This identification is for operating the outdoor units 4 from the outdoor unit 4 lowest in capacity to achieve the above-described object of (1).

At step S5, the unit number control unit 5c ultimately selects, from the outdoor unit(s) 4 identified at step S4, the outdoor unit 4 smallest in the number of turn-ons and turn-offs of the compressor 41 included in the outdoor unit 4 as the outdoor unit 4 to be operated. This selection is for equalizing the number of turn-ons and turn-offs of the compressors 41 to achieve the above-described object of (2). In this comparison of the number of turn-ons and turn-offs of the compressors 41, there is no need to equalize the number on the order of single digits. The comparison may be performed in certain units, such as units of 10 times and units of 100 times, for example, to equalize the number. Subsequently, the unit number control unit 5c proceeds to step S6.

At step S6, the unit number control unit 5c compares the basic capacity of the outdoor unit 4 selected at step S5 with the total required capacity received from the AHU controller 3. When having determined, as a result of comparison between the basic capacity of the outdoor unit 4 and the total required capacity, that the basic capacity of the single outdoor unit 4 equals or exceeds the total required capacity, the unit number control unit 5c proceeds to step S7. When the basic capacity of the selected outdoor unit 4 falls below the total required capacity, on the other hand, the unit number control unit 5c proceeds to step S8. Herein, proceeding to step S7 indicates that the total required capacity is met by the determined single outdoor unit 4 alone. Meanwhile, proceeding to step S8 indicates that the total required capacity is not met by the single outdoor unit 4 alone, and thus that it is necessary to operate two or more outdoor units 4.

At step S7, the unit number control unit 5c determines the operating frequency of the outdoor unit 4 selected at step S5. Specifically, the unit number control unit 5c determines the operating frequency of the compressor 41 included in the selected outdoor unit 4 to enable the outdoor unit 4 to meet the required capacity required of the outdoor unit 4.

At step S8, the unit number control unit 5c determines the operating frequency of the outdoor unit 4 selected at step S5. Specifically, the unit number control unit 5c first determines whether or not the heat source load is high. Herein, the unit number control unit 5c makes the determination on the basis of whether or not the total required capacity is higher than a threshold A%. When having determined that the total required capacity is higher than the threshold A%, the unit number control unit 5c determines to drive the compressor 41 at the maximum frequency such that the outdoor unit 4 exerts its basic capacity. When having determined that the total required capacity is lower than the threshold A%, on the other hand, the unit number control unit 5c determines the operating frequency of the compressor 41 included in the outdoor unit 4 by setting A% of the basic capacity of the outdoor unit 4 as the required capacity. To set the threshold A%, the threshold A% may be set on the basis of the total required capacity at which the performance of the outdoor unit 4 starts to decrease. Further, the threshold may be changed for each set of characteristics of the selected outdoor unit 4. With the operating frequency thus determined, it is possible to avoid as much as possible driving the compressor 41 at the maximum operating frequency to achieve the above-described object of (3).

At step S9, the unit number control unit 5c determines, as a new total required capacity, the value obtained by subtracting the required capacity of the outdoor unit 4 selected at step S5 from the total required capacity received from the AHU controller 3. The unit number control unit 5c then proceeds to step S10. Herein, the threshold A% is not particularly changed.

At step S10, the unit number control unit 5c removes the outdoor unit 4 selected at step S5 from the options in the selection of two or more outdoor units 4. The unit number control unit 5c then proceeds to step S11.

At step S11, the unit number control unit 5c determines whether or not the options include a remaining outdoor unit 4. When having determined that the options include a remaining outdoor unit 4, the unit number control unit 5c returns to step S4 to select a new outdoor unit 4 and determine the operating frequency of the compressor 41 included in the outdoor unit 4. When the options do not include a remaining outdoor unit 4, on the other hand, the unit number control unit 5c completes the unit number control. The unit number control unit 5c then determines to operate the outdoor unit 4 selected at step S5 by driving the compressor 41 at the operating frequency determined at step S8.

When having returned to step S4 after step S11, the unit number control unit 5c selects the necessary number of outdoor units 4 and determines the operating frequency of the compressor 41 included in each of the outdoor units 4 similarly as in the initial selection of the first outdoor unit 4.

Although not included in the flowchart of Fig. 4, a step of determining whether or not the total required capacity received from the AHU controller 3 is 100%, for example, may be processed as a step preceding step S3. The flowchart may further include a step of operating all outdoor units 4 with the basic capacities when the total required capacity is determined to be 100%.

Table 1 is a table illustrating a specific example of calculation in the unit number control performed by the unit number control unit 5c according to Embodiment 1 of the present invention. Table 1 illustrates an example of the air-conditioning system including the three outdoor units 4A, 4B, and 4C. The basic capacities of the outdoor units 4 are 5 kW for the outdoor unit 4A, 5 kW for the outdoor unit 4B, and 10 kW for the outdoor unit 4C. The total sum capacity of the air-conditioning system is thus 20 kW. Table 1 illustrates the results of calculations performed with the total required capacity increased at intervals of 10% of the total sum capacity. Further, the threshold A% for determining the level of the heat source load is set to 80% of the total required capacity. Furthermore, the number of turn-ons and turn-offs of the compressor 41 is assumed to be smaller for the compressor 41 included in the outdoor unit 4A than for the compressor 41 included in the outdoor unit 4B.

**[Table 1]**

| Total required capacity received from AHU controller 3 | | Required capacity of outdoor unit 4A (5 kW) | | Required capacity of outdoor unit 4B (5 kW) | | Required capacity of outdoor unit 4C (10 kW) | |
|---|---|---|---|---|---|---|---|
| [kW] | [%] | [kW] | [%] | [kW] | [%] | [kW] | [%] |
| 0 | 0% | 0 | 0% | 0 | 0% | 0 | 0% |
| 2 | 10% | 2 | 40% | 0 | 0% | 0 | 0% |
| 4 | 20% | 4 | 80% | 0 | 0% | 0 | 0% |
| 6 | 30% | 4 | 80% | 2 | 40% | 0 | 0% |
| 8 | 40% | 4 | 80% | 4 | 80% | 0 | 0% |
| 10 | 50% | 4 | 80% | 4 | 80% | 4 | 40% |
| 12 | 60% | 4 | 80% | 4 | 80% | 4 | 40% |
| 14 | 70% | 4 | 80% | 4 | 80% | 6 | 60% |
| 16 | 80% | 4 | 80% | 4 | 80% | 8 | 80% |
| 18 | 90% | 5 | 100% | 5 | 100% | 8 | 80% |
| 20 | 100% | 5 | 100% | 5 | 100% | 10 | 100% |

In the unit number control illustrated in the flowchart of Fig. 4, when the total required capacity received from the AHU controller 3 is 0%, for example, the unit number control unit 5c proceeds from step S1 to step S2 to perform the process to stop all outdoor units 4.

When the total required capacity received from the AHU controller 3 is 10% (2 kW), the unit number control unit 5c proceeds to step S4. At step S4, the unit number control unit 5c identifies the outdoor units 4A and 4B, each of which has the basic capacity of 5 kW, as the outdoor units 4 having the minimum basic capacity. Then, at step S5, the unit number control unit 5c selects from the outdoor units 4A and 4B the outdoor unit 4A including the compressor 41 having the smaller number of turn-ons and turn-offs.

Then, at step S6, the unit number control unit 5c compares the basic capacity of the selected outdoor unit 4A (5 kW) with the total required capacity of 10% (2 kW). The unit number control unit 5c determines that the capacity of the outdoor unit 4A is higher than the total required capacity, and proceeds to step S7. At step S7, the unit number control unit 5c determines the operating frequency of the compressor 41 to enable the outdoor unit 4A to perform an operation meeting the required capacity (2 kW). As it is possible to cover the total required capacity with the outdoor unit 4A alone, the outdoor unit 4A alone operates with the compressor 41 driven at the determined operating frequency to meet the required capacity of 2 kW.

When the total required capacity received from the AHU controller 3 is 20% (4 kW), it is also possible to cover the total required capacity with the outdoor unit 4A alone. Similarly as in the case in which the total required capacity is 10%, consequently, the outdoor unit 4A alone operates with the compressor 41 driven at the determined operating frequency to meet the required capacity of 4 kW.

When the total required capacity received from the AHU controller 3 is 30% (6 kW), the unit number control unit 5c proceeds to step S5 in Fig. 4 to select the outdoor unit 4A similarly as in the case in which the total required capacity is 10%. Then, at step S6, the unit number control unit 5c compares the basic capacity of the outdoor unit 4A (5 kW) with the total required capacity (6 kW). Consequently, the basic capacity of the outdoor unit 4A is lower than the total required capacity, and thus the unit number control unit 5c proceeds to step S8. The unit number control unit 5c then determines the required capacity of the outdoor unit 4A and the operating frequency based on the required capacity. Herein, the threshold A% equals 80%. When the total required capacity is 30%, consequently, the required capacity of the outdoor unit 4A is 4 kW corresponding to 80% of the basic capacity. The unit number control unit 5c further determines the operating frequency of the compressor 41 to enable the outdoor unit 4A to perform an operation meeting the required capacity (4 kW). Subsequently, at step S9, the unit number control unit 5c calculates, as a new required capacity, required capacity (6 kW) - operation capacity of selected outdoor unit 4A (4 kW) = 2 kW. Then, at step S10, the unit number control unit 5c removes the outdoor unit 4A from the options. Subsequently, the unit number control unit 5c returns to step S4 from step S11 to perform a process of selecting the second outdoor unit 4.

In the outdoor units 4 of the options, the outdoor unit 4B has the minimum basic capacity. At step S5, consequently, the unit number control unit 5c selects the outdoor unit 4B as the second outdoor unit 4. Further, at step S6, the unit number control unit 5c compares the basic capacity of the outdoor unit 4B (5 kW) with the new total required capacity (2 kW). As the basic capacity of the outdoor unit 4B is higher than the new total required capacity, the unit number control unit 5c proceeds to step S7. Consequently, the required capacity of the outdoor unit 4B is determined to be the total required capacity (2 kW), and the operating frequency of the compressor 41 is determined to meet the total required capacity.

When the total required capacity received from the AHU controller 3 is 40% (8 kW), the unit number control unit 5c selects the outdoor unit 4A as the first outdoor unit 4 similarly as in the case in which the total required capacity is 30%. Further, the required capacity of the outdoor unit 4A is determined to be 4 kW. At step S9, consequently, the new total required capacity to be calculated is 8 kW - 4 kW = 4 kW. Subsequently, the unit number control unit 5c returns to step S4 to continue the process similarly as in the case in which the total required capacity is 30%. Consequently, the unit number control unit 5c selects the outdoor unit 4B at step S5. Subsequently, the unit number control unit 5c proceeds to step S7, at which the required capacity of the outdoor unit 4B is determined to be the total required capacity (4 kW), and the operating frequency of the compressor 41 is determined to meet the total required capacity.

When the total required capacity received from the AHU controller 3 is 50% (10 kW), the unit number control unit 5c selects the outdoor unit 4A at step S5 similarly as in the case in which the total required capacity is 30%. Further, at step S8, the unit number control unit 5c determines the required capacity of the outdoor unit 4A to be 4 kW, and determines the operating frequency of the compressor 41. Then, at step S9, the unit number control unit 5c determines the new total required capacity as 10 kW - 4 kW = 6 kW. Subsequently, the unit number control unit 5c performs the processes of steps S10 and S11 and returns to step S4.

In the outdoor units 4 of the options, the outdoor unit 4B has the minimum basic capacity. At step S5, consequently, the unit number control unit 5c selects the outdoor unit 4B as the second outdoor unit 4. Further, at step S6, the unit number control unit 5c compares the basic capacity of the outdoor unit 4B (5 kW) with the new total required capacity (6 kW). As the basic capacity of the outdoor unit 4B is lower than the new total required capacity, the unit number control unit 5c proceeds to step S8. At step S8, the unit number control unit 5c determines the required capacity of the outdoor unit 4B to be 4 kW, and determines the operating frequency of the compressor 41. Then, at step S9, the unit number control unit 5c determines the new total required capacity as 6 kW - 4 kW = 2 kW. Subsequently, the unit number control unit 5c performs the processes of steps S10 and S11 and returns to step S4.

In the outdoor unit 4 of the options, the outdoor unit 4C has the minimum basic capacity. At step S5, consequently, the unit number control unit 5c selects the outdoor unit 4C as the third outdoor unit 4. Further, at step S6, the unit number control unit 5c compares the basic capacity of the outdoor unit 4C (10 kW) with the new total required capacity (2 kW). As the basic capacity of the outdoor unit 4C is higher than the new total required capacity, the unit number control unit 5c proceeds to step S7. Consequently, the required capacity of the outdoor unit 4C is determined to be the total required capacity (2 kW), and the operating frequency of the compressor 41 is determined to meet the total required capacity.

Herein, for example, the minimum capacity enabling a single outdoor unit 4 to perform a continuous operation without the on-off cycle operation involving turn-ons and turn-offs of the compressor 41 is normally approximately 40% of the basic capacity. As illustrated in Table 1, consequently, the required capacity of the outdoor unit 4C is determined to be 40% of the basic capacity (4 kW).

When the total required capacity received from the AHU controller 3 is 60% (12 kW), the unit number control unit 5c selects the outdoor unit 4A as the first outdoor unit 4 similarly as in the case in which the total required capacity is 50%. Further, the unit number control unit 5c determines the required capacity required of the outdoor unit 4A to be 80% (4 kW). The unit number control unit 5c further selects the outdoor unit 4B as the second outdoor unit 4. The unit number control unit 5c determines the required capacity required of the outdoor unit 4B to be 80% (4 kW). The unit number control unit 5c finally selects the outdoor unit 4C as the third outdoor unit 4, and determines the required capacity required of the outdoor unit 4C to be 40% (4 kW). The unit number control unit 5c determines the operating frequency of the compressor 41 included in each of the outdoor units 4 to meet the required capacity required of each of the outdoor units 4.

When the total required capacity received from the AHU controller 3 is 70% (14 kW), the unit number control unit 5c performs processing similarly as in the case in which the total required capacity is 50%. Consequently, the required capacity of the outdoor unit 4A is determined to be 4 kW, the required capacity of the outdoor unit 4B is determined to be 4 kW, and the required capacity of the outdoor unit 4C is determined to be 6 kW. The unit number control unit 5c determines the operating frequency of the compressor 41 included in each of the outdoor units 4 to meet the required capacity required of each of the outdoor units 4.

When the total required capacity received from the AHU controller 3 is 80% (16 kW), the unit number control unit 5c performs processing similarly as in the case in which the total required capacity is 50%. Consequently, the required capacity of the outdoor unit 4A is determined to be 4 kW, the required capacity of the outdoor unit 4B is determined to be 4 kW, and the required capacity of the outdoor unit 4C is determined to be 8 kW. The unit number control unit 5c determines the operating frequency of the compressor 41 included in each of the outdoor units 4 to meet the required capacity required of each of the outdoor units 4.

When the total required capacity received from the AHU controller 3 is 90% (18 kW), the unit number control unit 5c performs processing similarly as in the case in which the total required capacity is 80%. Herein, the total required capacity of 90% exceeds the threshold of 80%. At step S8, consequently, the required capacity of each of the initially selected outdoor unit 4A and the outdoor unit 4B selected as the second outdoor unit 4 is determined to be 5 kW (100%). Each of the outdoor units 4A and 4B thus performs an operation of driving the compressor 41 at the maximum operating frequency. Further, the required capacity of the outdoor unit 4C is determined to be 8 kW.

When the total required capacity received from the AHU controller 3 is 100% (20 kW), the unit number control unit 5c performs processes such as calculation similar to that performed in the case in which the total required capacity is 90%. Consequently, all outdoor units 4 each perform the operation of driving the compressor 41 at the maximum operating frequency.

For example, the minimum capacity enabling a single outdoor unit 4 to perform the continuous operation is normally approximately 40% of the basic capacity, as described above. For example, in an air-conditioning system in which a single outdoor unit having a high basic capacity covers a required capacity of 20 kW, as in the configuration of an existing system, the minimum capacity that can be covered by the continuous operation is approximately 8 kW. When the required capacity is lower than 8 kW corresponding to the minimum capacity of the outdoor unit, consequently, the continuous operation of the outdoor unit 4 results in overcapacity, and thus the outdoor unit 4 inevitably performs the on-off cycle operation.

To reduce the frequency of the on-off cycle operation, Embodiment 1 includes the plurality of outdoor units 4 to form the plurality of heat pump apparatuses 100, instead of using a single outdoor unit having a high basic capacity to form a heat pump apparatus 100, to thereby meet the required capacity of the AHU 2 corresponding to the heat source load. Further, as described above, when the total required capacity corresponding to the required capacity of the AHU 2 is low, one of the outdoor units 4 is driven, for example. When the required capacity is increased, the operating frequency of the compressor 41 included in the outdoor unit 4 is increased, or the number of outdoor units 4 to be operated is increased.

Consequently, the outdoor units in the configuration of the air-conditioning system of Embodiment 1 are not required to perform the on-off cycle operation in which the compressor 41 repeatedly turns on and off. Further, the minimum total required capacity that can be covered by the continuous operation corresponds to the capacity of the outdoor unit 4 having the minimum basic capacity among the connected outdoor units 4. In the example of Table 1, the minimum total required capacity that can be covered by the continuous operation is 2 kW (40% of 5 kW), which corresponds to the minimum capacity of the outdoor unit 4A (5 kW). For example, when the air-conditioning system as a whole is configured such that a single outdoor unit covers the total required capacity, the compressor 41 starts the on-off cycle operation when the required capacity falls below 40% (8 kW in the example of Table 1).

Meanwhile, the air-conditioning system of Embodiment 1 enables the continuous operation (stable operation) without the on-off cycle operation of the compressor 41 until the total required capacity falls below 10% (= (2 kW/20 kW) × 100). Consequently, even when there is a request from the AHU 2 under a low load in an operation such as ventilation during an intermediate season (spring or fall), the air-conditioning system of Embodiment 1 is capable of performing the continuous operation without the on-off cycle operation of the compressor.

Further, the air-conditioning system of Embodiment 1 is configured to perform the unit number control of preferentially operating the outdoor unit 4 having the lowest basic capacity while the required capacity is increased. Consequently, the changes of the selected outdoor unit due to fluctuations of the required capacity are reduced, thereby enabling a reduction in the number of turn-ons and turn-offs caused by the changes of the required capacity.

As described above, the air-conditioning system of Embodiment 1 includes the plurality of outdoor units 4 each including the compressor 41, and the unit number control unit 5c performs the unit number control of selecting the outdoor unit 4 to be operated and determining the operating frequency of the compressor 41 of the selected outdoor unit 4 corresponding to the total required capacity. It is thereby possible to reduce the frequency of the on-off cycle operation of the compressor 41 under a low load, and the reduction in the number of turn-ons and turn-offs of the compressor 41 enables the extension of the life of the compressor 41. It is also possible to reduce the risk of discomfort due to fluctuations in the blowoff temperature of the AHU caused by the on-off cycle operation of the compressor 41.

Further, each of the heat pump apparatuses 100 is configured to include one compressor 41. Consequently, the outdoor unit 4 including the compressor 41, the expansion valve 44, and the outdoor heat exchanger 43 may be replaced by an outdoor unit having the same specifications as those of a normal air-conditioning apparatus (an outdoor unit equipped with one compressor), and a plurality of such outdoor units may be connected together to form the air-conditioning system. Consequently, it is possible to form the air-conditioning system at low cost with no need to newly develop outdoor units.

### Embodiment 2

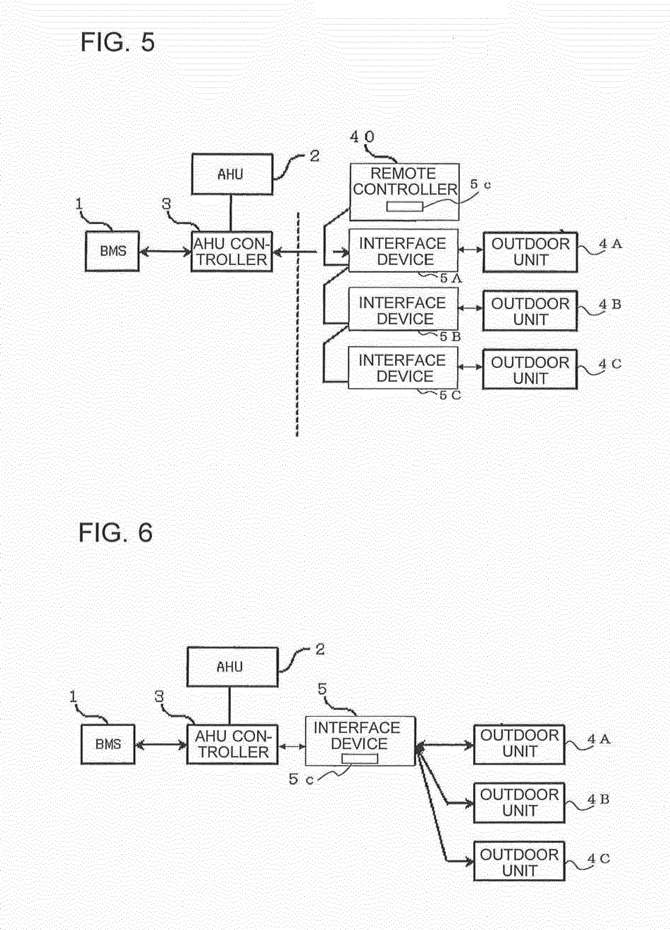

Fig. 5 is a diagram illustrating a system configuration of a control system of an air-conditioning system in Embodiment 2 of the present invention. In Fig. 5, components such as devices assigned with the same reference signs as those in another drawing such as Fig. 1 perform operations similar to those described in Embodiment 1. The air-conditioning system of Embodiment 2 is configured to include a remote controller 40 (hereinafter referred to as the remote control 40). Specifically, the remote control 40 is a remote control used in initial setting by an installer of the air-conditioning system or a facility manager, for example. The remote control 40 is connected to all interface devices 5. Further, the remote control 40 includes the unit number control unit 5c. The remote control 40 thus performs the unit number control of selecting the outdoor unit 4 to be operated and determining the operating frequency of the compressor 41 included in the selected outdoor unit 4, which is performed by the interface device 5 serving as the main unit in Embodiment 1. Basic concepts of the unit number control are similar to those described in Embodiment 1. Herein, the modified examples applied to the configuration of Embodiment 1 are similarly applicable to similar parts of the configuration of Embodiment 2. The same is true in Embodiments 3 to 5 to follow.

Consequently, an air-conditioning system configured as in Embodiment 2 is also capable of obtaining effects similar to those of the air-conditioning system of Embodiment 1.

### Embodiment 3

Fig. 6 is a diagram illustrating a system configuration of a control system of an air-conditioning system in Embodiment 3 of the present invention. In Fig. 6, components such as devices assigned with the same reference signs as those in another drawing such as Fig. 1 perform operations similar to those described in Embodiment 1.

The air-conditioning system of Embodiment 1 has the interface devices 5 connected between the AHU controller 3 and all outdoor units 4, and thus includes the same number of interface devices 5 as that of the outdoor units 4. The air-conditioning system of Embodiment 3 includes a single interface device 5. The interface device 5 includes the unit number control unit 5c to perform the unit number control. Basic concepts of the unit number control are similar to those described in Embodiment 1.

Consequently, an air-conditioning system configured as in Embodiment 3 is also capable of obtaining effects similar to those of the air-conditioning system of Embodiment 1.

### Embodiment 4

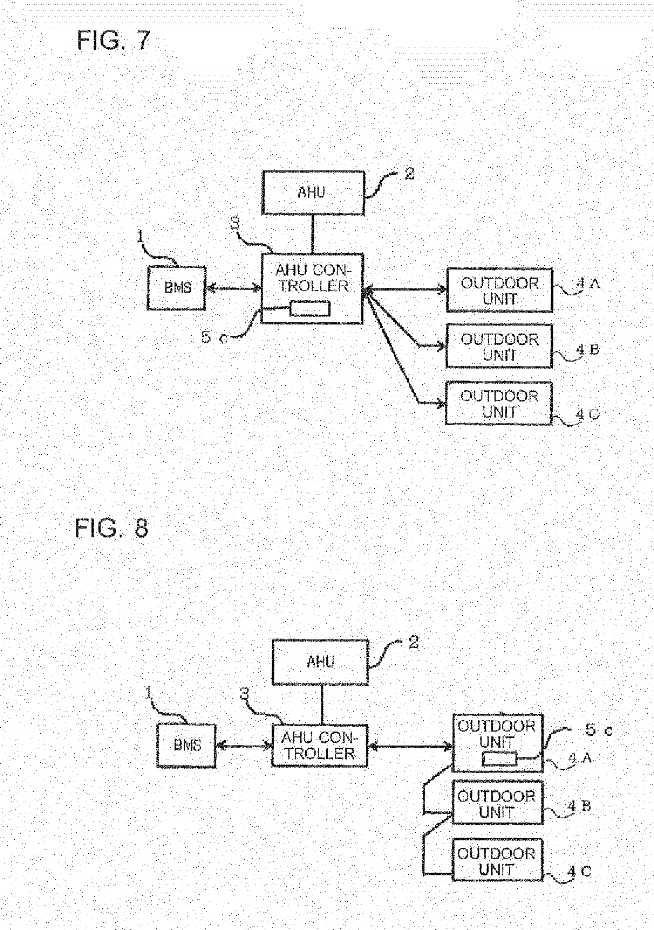

Fig. 7 is a diagram illustrating a system configuration of a control system of an air-conditioning system in Embodiment 4 of the present invention. In Fig. 7, components such as devices assigned with the same reference signs as those in another drawing such as Fig. 1 perform operations similar to those described in Embodiment 1. The air-conditioning system of Embodiment 4 is configured to include the unit number control unit 5c in the AHU controller 3. The AHU controller 3 thus performs the unit number control of selecting the outdoor unit 4 to be operated and determining the operating frequency of the compressor 41 included in the selected outdoor unit 4, which is performed by the interface device 5 serving as the main unit in Embodiment 1.

For example, when the AHU controller 3 and the outdoor units 4 are products of the same manufacturer and are capable of directly exchanging signals with each other, there is no need to install the interface devices 5. With the AHU controller 3 performing the unit number control, the air-conditioning system is capable of performing the unit number control even when the air-conditioning system does not include the interface devices 5. Basic concepts of the unit number control are similar to those described in Embodiment 1.

Consequently, an air-conditioning system configured as in Embodiment 4 is also capable of obtaining effects similar to those of the air-conditioning system of Embodiment 1.

### Embodiment 5

Fig. 8 is a diagram illustrating a system configuration of a control system of an air-conditioning system in Embodiment 5 of the present invention. In Fig. 8, components such as devices assigned with the same reference signs as those in another drawing such as Fig. 1 perform operations similar to those described in Embodiment 1. The air-conditioning system of Embodiment 5 is configured to include the unit number control unit 5c in one of the outdoor units 4.

For example, with one of the plurality of outdoor units 4 serving as a main outdoor unit 4 and performing the unit number control, the air-conditioning system is capable of performing the unit number control, even when the air-conditioning system does not include the interface devices 5. Basic concepts of the unit number control are similar to those described in Embodiment 1.

Consequently, an air-conditioning system configured as in Embodiment 5 is also capable of obtaining effects similar to those of the air-conditioning system of Embodiment 1.

### Reference Signs List

1 building management system 2 air handling unit 2A body casing 3 AHU controller 3a AHU controller actuator control unit 3b capacity calculating unit 3c AHU controller communication unit 4, 4A, 4B, 4C outdoor unit 4a outdoor unit actuator control unit 4b outdoor unit communication unit 5, 5A, 5B, 5C interface device 5a outdoor unit control unit 5b interface communication unit 5c unit number control unit 6 refrigerant pipe 11 blowoff air temperature sensor 12 heat exchange inlet temperature sensor 13 building interior temperature sensor 14 outside air temperature sensor 21 first passage 22 second passage 23, 28 louver 24, 29 filter 25 heat recovery device 26 air supply fan 27 heat exchange coil 30 air exhaust fan 40 remote controller 41 compressor 42 four-way valve 43 outdoor heat exchanger 44 expansion valve 100, 100A, 100B, 100C heat pump apparatus

## Claims

1. An air-conditioning system comprising:
an air handling unit (2) including an air exhaust fan (30) configured to form a flow of air from an inside of a building toward an outside of the building, an air supply fan (26) configured to form a flow of air from the outside of the building toward the inside of the building, and at least one heat exchange coil (27) configured to exchange heat between air flowing from the outside of the building to the inside of the building and refrigerant;
a plurality of outdoor units (4) each including a compressor (41), a pressure reducing device (44), and an outdoor heat exchanger (43), and each connected to the at least one heat exchange coil (27) with a refrigerant pipe to each form an independent heat pump apparatus (100); **characterised by** further comprising
a unit number control unit (5c) configured to perform unit number control of selecting at least one of the plurality of outdoor units (4) to be operated and determining an operating frequency of the compressor (41) included in the at least one of the plurality of outdoor units (4) to be operated to meet a total required capacity required of the air handling unit (2) corresponding to a heat source load,
the plurality of outdoor units (4) including outdoor units (4) different in basic capacity,
the unit number control unit (5c) being configured to identify at least one of the plurality of outdoor units (4) lowest in the basic capacity, and select the at least one of the plurality of outdoor units (4) from the at least one of the plurality of outdoor units (4) that is identified.

2. The air-conditioning system of claim 1, wherein the unit number control unit (5c) is configured to preferentially select, as the at least one of the plurality of outdoor units (4) to be operated, from the at least one of the plurality of outdoor units (4) that is identified, one of the plurality of outdoor units (4) having a smallest number of turn-ons and turn-offs of the compressor (41).

3. The air-conditioning system of claim 1 or 2, wherein, in response to determining that the total required capacity equals or exceeds a predetermined capacity, the unit number control unit (5c) is configured to set the operating frequency of the compressor (41) included in the at least one of the plurality of outdoor units (4) that is selected to a maximum operating frequency.

4. The air-conditioning system of one of claims 1 to 3, further comprising:
an air handling unit controller (3) including an actuator control unit (3a) configured to control a driving device included in the air handling unit (2), a capacity calculating unit (3b) configured to calculate the total required capacity required of the air handling unit (2) corresponding to the heat source load, and a controller communication unit (3c) configured to transmit a signal including the total required capacity as data to the unit number control unit (5c); and
at least one interface device (5) configured to relay communication between the air handling unit controller (3) and the plurality of outdoor units (4),
wherein the unit number control unit (5c) is included in the at least one interface device (5).

5. The air-conditioning system of one of claims 1 to 3, further comprising:
an air handling unit controller (3) including an actuator control unit (3a) configured to control a driving device included in the air handling unit (2), a capacity calculating unit (3b) configured to calculate the total required capacity required of the air handling unit (2) corresponding to the heat source load, and a controller communication unit (3c) configured to transmit a signal including the total required capacity as data to the unit number control unit (5c);
at least one interface device (5) configured to relay communication between the air handling unit controller (3) and the plurality of outdoor units (4); and
a remote controller (40) connected to the at least one interface device (5) to transmit an input instruction to the air handling unit (2),
wherein the unit number control unit (5c) is included in the remote controller (40).

6. The air-conditioning system of one of claims 1 to 3, further comprising:
an air handling unit controller (3) including an actuator control unit (3a) configured to control a driving device included in the air handling unit (2), a capacity calculating unit (3b) configured to calculate the total required capacity required of the air handling unit (2) corresponding to the heat source load, and a controller communication unit (3c) configured to transmit a signal including the total required capacity as data to the unit number control unit (5c),
wherein the unit number control unit (5c) is included in the air handling unit controller (3).

7. The air-conditioning system of one of claims 1 to 3, wherein the unit number control unit (5c) is included in one of the plurality of outdoor units (4).

## Patentansprüche

1. Klimaanlage, umfassend:
eine Lufthandhabungseinheit (2), aufweisend einen Luftabzugslüfter (30), der eingerichtet ist, einen Luftstrom von einer Innenseite eines Gebäudes zu einer Außenseite des Gebäudes zu bilden, einen Luftzufuhrlüfter (26), der eingerichtet ist, einen Luftstrom von der Außenseite des Gebäudes zu der Innenseite des Gebäudes zu bilden, und zumindest eine Wärmetauscherspirale (27), die eingerichtet ist, Wärme zwischen Luft, die von der Außenseite des Gebäudes zu der Innenseite des Gebäudes strömt, und Kältemittel auszutauschen;
eine Vielzahl von Außeneinheiten (4), die jeweils einen Verdichter (41), eine Druckreduziereinrichtung (44) und einen Außenwärmetauscher (43) umfassen und jeweils mit der zumindest einen Wärmetauscherspirale (27) mithilfe einer Kältemittelleitung verbunden sind, um jeweils eine unabhängige Wärmepumpenvorrichtung (100) zu bilden; **dadurch gekennzeichnet, dass** sie ferner umfasst
eine Einheitenzahlsteuereinheit (5c), die eingerichtet ist, Einheitenzahlsteuerung des Auswählens zumindest einer der Vielzahl von zu betreibenden Außeneinheiten (4) und des Bestimmens einer Betriebsfrequenz des Verdichters (41), der in der zumindest einen der Vielzahl von zu betreibenden Außeneinheiten (4) enthalten ist, durchzuführen, um eine erforderliche Gesamtkapazität zu erfüllen, die von der Lufthandhabungseinheit (2) entsprechend einer Wärmequellenlast gefordert wird,
wobei die Vielzahl von Außeneinheiten (4) Außeneinheiten (4) umfasst, die sich in der Grundkapazität unterscheiden,
wobei die Einheitenzahlsteuereinheit (5c) eingerichtet ist, zumindest eine der Vielzahl von Außeneinheiten (4) mit der niedrigsten Grundkapazität zu identifizieren und die zumindest eine der Vielzahl von Außeneinheiten (4) von der zumindest einen der Vielzahl von Außeneinheiten (4), die identifiziert ist, auszuwählen.

2. Klimaanlage nach Anspruch 1, wobei die Einheitenzahlsteuereinheit (5c) eingerichtet ist, als die zumindest eine der Vielzahl von zu betreibenden Außeneinheiten (4) aus der zumindest einen der Vielzahl von Außeneinheiten (4), die identifiziert wurde, bevorzugt die eine der Vielzahl von Außeneinheiten (4) auszuwählen, die eine kleinste Anzahl von Einschaltungen und Ausschaltungen des Verdichters (41) aufweist.

3. Klimaanlage nach Anspruch 1 oder 2, wobei als Reaktion auf die Bestimmung, dass die erforderliche Gesamtkapazität einer vorbestimmten Kapazität entspricht oder diese übersteigt, die Einheitenzahlsteuereinheit (5c) eingerichtet ist, die Betriebsfrequenz des Verdichters (41), der in der zumindest einen der Vielzahl von Außeneinheiten (4), die ausgewählt ist, enthalten ist, auf eine maximale Betriebsfrequenz einzustellen.

4. Klimaanlage nach einem der Ansprüche 1 bis 3, ferner umfassend:
eine Lufthandhabungseinheit-Steuerung (3), aufweisend eine Aktuatorsteuereinheit (3a), die eingerichtet ist, eine Antriebseinrichtung, die in der Lufthandhabungseinheit (2) enthalten ist, zu steuern, eine Kapazitätsberechnungseinheit (3b), die eingerichtet ist, die erforderliche Gesamtkapazität der Lufthandhabungseinheit (2), die der Wärmequellenlast entspricht, zu berechnen, und eine Steuerungskommunikationseinheit (3c), die eingerichtet ist, ein Signal, das die erforderliche Gesamtkapazität beinhaltet, als Daten an die Einheitenzahlsteuereinheit (5c) zu übertragen; und
zumindest eine Schnittstelleneinrichtung (5), die eingerichtet ist, Kommunikation zwischen der Lufthandhabungseinheit-Steuerung (3) und der Vielzahl von Außeneinheiten (4) weiterzuleiten,
wobei die Einheitenzahlsteuereinheit (5c) in der zumindest einen Schnittstelleneinrichtung (5) enthalten ist.

5. Klimaanlage nach einem der Ansprüche 1 bis 3, ferner umfassend:
eine Lufthandhabungseinheit-Steuerung (3), aufweisend eine Aktuatorsteuereinheit (3a), die eingerichtet ist, eine Antriebseinrichtung, die in der Lufthandhabungseinheit (2) enthalten ist, zu steuern, eine Kapazitätsberechnungseinheit (3b), die eingerichtet ist, die erforderliche Gesamtkapazität der Lufthandhabungseinheit (2), die der Wärmequellenlast entspricht, zu berechnen, und eine Steuerungskommunikationseinheit (3c), die eingerichtet ist, ein Signal, das die erforderliche Gesamtkapazität beinhaltet, als Daten an die Einheitenzahlsteuereinheit (5c) zu übertragen;
zumindest eine Schnittstelleneinrichtung (5), die eingerichtet ist, Kommunikation zwischen der Lufthandhabungseinheit-Steuerung (3) und der Vielzahl von Außeneinheiten (4) weiterzuleiten; und
eine Fernsteuerung (40), die mit der zumindest einen Schnittstelleneinrichtung (5) verbunden ist, um eine Eingabeanweisung an die Lufthandhabungseinheit (2) zu übertragen,
wobei die Einheitenzahlsteuereinheit (5c) in der Fernsteuerung (40) enthalten ist.

6. Klimaanlage nach einem der Ansprüche 1 bis 3, ferner umfassend:
eine Lufthandhabungseinheit-Steuerung (3), aufweisend eine Aktuatorsteuereinheit (3a), die eingerichtet ist, eine Antriebseinrichtung, die in der Lufthandhabungseinheit (2) enthalten ist, zu steuern, eine Kapazitätsberechnungseinheit (3b), die eingerichtet ist, die erforderliche Gesamtkapazität der Lufthandhabungseinheit (2), die der Wärmequellenlast entspricht, zu berechnen, und eine Steuerungskommunikationseinheit (3c), die eingerichtet ist, ein Signal, das die erforderliche Gesamtkapazität beinhaltet, als Daten an die Einheitenzahlsteuereinheit (5c) zu übertragen,
wobei die Einheitenzahlsteuereinheit (5c) in der Lufthandhabungseinheit-Steuerung (3) enthalten ist.

7. Klimaanlage nach einem der Ansprüche 1 bis 3, wobei die Einheitenzahlsteuereinheit (5c) in einer der Vielzahl von Außeneinheiten (4) enthalten ist.

## Revendications

1. Système de climatisation comprenant :
un unité de traitement de l'air (2) comprenant une soufflante d'extraction d'air (30) configurée afin de former un flux d'air à partir de l'intérieur d'un bâtiment vers l'extérieur du bâtiment, une soufflante de fourniture d'air (26) configurée afin de former un flux d'air à partir de l'extérieur du bâtiment vers l'intérieur du bâtiment, et au moins un serpentin d'échange thermique (27) configuré afin d'échanger la chaleur entre l'air qui circule à partir de l'extérieur du bâtiment vers l'intérieur du bâtiment, et un fluide frigorigène ;
une pluralité d'unités extérieures (4), chacune d'elles comprenant un compresseur (41), un dispositif de réduction de la pression (44), et un échangeur de chaleur extérieur (43), et chacune d'elles étant connectée auditau moins un serpentin d'échange thermique (27) par une canalisation de fluide frigorigène, afin de former chacune un appareil de pompe à chaleur indépendant (100) ;
**caractérisé en ce qu'**il comprend en outre
une unité de commande d'un nombre d'unités (5c), configurée afin d'effectuer une commande d'un nombre d'unités afin de sélectionner au moins une de la pluralité d'unités extérieures (4) à actionner, et de déterminer la fréquence de fonctionnement du compresseur (41) inclus dans ladite au moins une de la pluralité d'unités extérieures (4) à actionner, afin de satisfaire à une capacité requise totale requise par l'unité de traitement de l'air (2), correspondant à une charge de source de chaleur,
la pluralité d'unités extérieures (4) comprenant des unités extérieures (4) dont les capacités de base sont différentes,
l'unité de commande d'un nombre d'unités (5c) étant configurée afin d'identifier au moins une de la pluralité d'unités extérieures (4) dont la capacité de base est la plus basse, et de sélectionner ladite au moins une de la pluralité d'unités extérieures (4) parmi ladite au moins une de la pluralité d'unités extérieures (4) qui est identifiée.

2. Système de climatisation selon la revendication 1, où l'unité de commande d'un nombre d'unités (5c) est configurée afin de sélectionner de manière préférentielle, en tant que ladite au moins une de la pluralité d'unités extérieures (4) à actionner, parmi ladite au moins une de la pluralité d'unités extérieures (4) qui est identifiée, l'une de la pluralité d'unités extérieures (4) qui présente le plus petit nombre de mises en service et de mises hors service du compresseur (41).

3. Système de climatisation selon la revendication 1 ou 2, où, en réponse à la détermination selon laquelle la capacité requise totale est égale ou supérieure à une capacité prédéterminée, l'unité de commande d'un nombre d'unités (5c) est configurée afin de fixer la fréquence de fonctionnement du compresseur (41) inclus dans ladite au moins une de la pluralité d'unités extérieures (4) qui est sélectionnée à une fréquence de fonctionnement maximum.

4. Système de climatisation selon l'une des revendications 1 à 3, comprenant en outre :
un contrôleur de l'unité de traitement de l'air (3) qui comprend une unité de commande d'actionneur (3a), configurée afin de commander un dispositif d'entraînement inclus dans l'unité de traitement de l'air (2), une unité de calcul de capacité (3b), configurée afin de calculer la capacité requise totale requise par l'unité de traitement de l'air (2) correspondant à la charge de source de chaleur, et une unité de communication de contrôleur (3c), configurée afin de transmettre un signal qui comprend la capacité requise totale en tant que données, à l'unité de commande d'un nombre d'unités (5c) ; et
au moins un dispositif d'interface (5), configuré afin de relayer une communication entre le contrôleur de l'unité de traitement de l'air (3), et la pluralité d'unités extérieures (4),
où l'unité de commande d'un nombre d'unités (5c) est incluse dans ledit au moins un dispositif d'interface (5).

5. Système de climatisation selon l'une des revendications 1 à 3, comprenant en outre :
un contrôleur de l'unité de traitement de l'air (3) qui comprend une unité de commande d'actionneur (3a), configurée afin de commander un dispositif d'entraînement inclus dans l'unité de traitement de l'air (2), une unité de calcul de capacité (3b), configurée afin de calculer la capacité requise totale requise par l'unité de traitement de l'air (2) correspondant à la charge de source de chaleur, et une unité de communication de contrôleur (3c), configurée afin de transmettre un signal qui comprend la capacité requise totale en tant que données, à l'unité de commande d'un nombre d'unités (5c) ;
au moins un dispositif d'interface (5), configuré afin de relayer une communication entre le contrôleur de l'unité de traitement de l'air (3), et la pluralité d'unités extérieures (4) ; et
un contrôleur à distance (40) connecté audit au moins un dispositif d'interface (5) afin de transmettre une instruction d'entrée à l'unité de traitement de l'air (2),
où l'unité de commande d'un nombre d'unités (5c) est incluse dans le contrôleur à distance (40).

6. Système de climatisation selon l'une des revendications 1 à 3, comprenant en outre :
un contrôleur de l'unité de traitement de l'air (3) qui comprend une unité de commande d'actionneur (3a), configurée afin de commander un dispositif d'entraînement inclus dans l'unité de traitement de l'air (2), une unité de calcul de capacité (3b), configurée afin de calculer la capacité requise totale requise par l'unité de traitement de l'air (2) correspondant à la charge de source de chaleur, et une unité de communication de contrôleur (3c), configurée afin de transmettre un signal qui comprend la capacité requise totale en tant que données, à l'unité de commande d'un nombre d'unités (5c),
où l'unité de commande d'un nombre d'unités (5c) est incluse dans le contrôleur de l'unité de traitement de l'air (3).

7. Système de climatisation selon l'une des revendications 1 à 3, où l'unité de commande d'un nombre d'unités (5c) est incluse dans l'une de la pluralité d'unités extérieures (4).
